# EUROPEAN PATENT APPLICATION

(11) **EP 4 506 407 A1**
(43) Date of publication of application: **12.02.2025**
(21) Application number: 23190342.8
(22) Date of filing: 08.08.2023
(51) Int. Cl.: C08L 23/06, B32B 27/32

(54) **PROCESS FOR PRODUCING A BLENDED POLYETHYLENE COMPOSITION COMPRISING RECYCLED POLYMER COMPOSITIONS**

(71) Applicant: Basell Polyolefine GmbH, 50389 Wesseling (DE)
(72) Inventor: ELSAS, Katharina, 65926 Frankfurt/M. (DE); MANNEBACH, Gerd, 65926 Frankfurt/M (DE)
(74) Representative: LyondellBasell

(57) **Abstract**

A process for producing a blended polyethylene composition comprising the step of blending a first component comprising one or more recycled polymer compositions and a second component comprising one or more virgin polyethylene.

## Description

### FIELD OF THE DISCLOSURE

The present disclosure refers to a process for producing a blended polyethylene composition, wherein the blended polyethylene composition comprises a first component comprising one or more recycled polymer compositions. The so obtained product is particularly suited for use in geomembranes.

### BACKGROUND OF THE DISCLOSURE

Polyethylene is a widely used polymer known for its versatility, low cost, and excellent chemical resistance. Polyethylene is commonly used for various applications, such as films for packaging, shopping bags, heavy-duty shipping sacks, foamed articles, blown articles, caps and closures, tubing, pipes, automotive parts, housewares, medical applications and many more.

Depending upon the specific applications, different characteristics of the polymer are required.

In particular, for manufacturing geomembranes, due to the polyethylene's' excellent chemical resistance, high tensile strength, and flexibility, polyethylene is a popular choice. Geomembranes play a crucial role in modern infrastructure projects and environmental protection. Geomembranes are very low permeability synthetic membrane liner or barrier used with any geotechnical engineering related material so as to control fluid migration in a human-made project, structure or system. They are designed to provide a reliable barrier against fluid migration, preventing environmental contamination and ensuring the long-term integrity of structures.

In view of current market developments that seek for reduction of environmental footprint in the value chain of materials, including polymer materials, there is an ongoing drive to re-use materials, and to reduce the quantity of "new" materials that are used in the production of a variety of articles.

In field of applications of polymer materials, this translates to a desire to recycle materials and to reduce the quantity of so-called "virgin" polymer material, i.e. polymer material that is provided as new polymers obtained from polymerization processes, such as from polymerization processes of fossil materials-based monomeric materials and/or biologically derived monomers.

Thus, an advantageous source of PE material is presently represented by PE recyclate, mainly coming from recovery of post-consumer and/or industrial plastic waste.

Such PE recyclate materials, obtained usually by separation from waste streams and often containing significant amounts of other polyethylene components, have rather variable properties and generally require processing like treatment to make them suited for the desired use.

There is therefore a need for efficient processing methods allowing the utilization of certain high quantity of recyclate material, in particular in view of circular materials efficiency and environmental concerns.

### SUMMARY OF THE DISCLOSURE

The present disclosure provides a process for producing a blended polyethylene composition for geomembranes, wherein the process comprises the step of blending a first component comprising one or more recycled polymer compositions, a second component comprising one or more polyethylene and optionally one or more additives, wherein the blended polyethylene composition comprises from 30 to 90 % by weight, in particular from 35 to 80 % by weight or from 40 to 70 % by weight, with respect to the total weight of the blended polyethylene composition, wherein the blended polyethylene composition has an environmental stress crack resistance (ESCR) of at least 500 hours measured according to ASTM D5397.

The so obtained blended polyethylene product has a sufficiently high ESCR for use in geomembranes, while having a relatively high content of recyclate material. In particular, the typically low ESCR of the recyclate material alone renders the recyclate material unsuitable for geomembrane applications. However, by blending the recyclate material with the second component, the blended composition will be upgraded relative to the recyclate material.

In some embodiments, the second component may be a low density polyethylene having a density from 0.910 to 0.940 g/cm³, preferably from 0.915 to 0.935 g/cm³ determined according to ISO 1183-1:2012 at 23°C. Preferably, the low density polyethylene may have a MIE from 0.1 to 3.0, preferably from 0.8 to 2.0, wherein MIE is the melt flow index at 190°C with a load of 2.16 kg determined according to ISO 1133-2:2011. The low-density polyethylene may be a copolymer, such as a copolymer comprising butyl acrylate comonomer. In some embodiments, the low-density polyethylene may further have a ESCR of more than 1500, preferably more than 1600 hours measured according to ASTM D1693.

In some embodiments, the first component may comprise a mixture of polyethylene (PE) and polypropylene (PP) polymers in a weight ratio from 99:1 to 51:49. Thus, the dominating component of the recyclate material is polyethylene. The first component is preferably a recycled high density polyethylene composition, having a density from 0.940 to 0.965 g/cm³ determined according to ISO 1183-1:2012 at 23°C.

In some embodiments, carbon black is added in an amount of 1.5 to 3.0 % by weight, preferably from 2.0 to 2.6 % by weight carbon black based on the total weight of the blended polyethylene composition. The blended polyethylene composition may have a density of between 0.932 and 0.942 g/cm³ when measured without carbon black. However, when carbon black is added, the density increases forming a high-density polyethylene having a density of between 0.940 to 0.965 g/cm³. With a higher density the stiffness, tensile strength, chemical resistance, and abrasion resistance increases, however, the impact strength, stress crack resistance and processability decreases. Thus, it has been found that a good compromise can be made when the blended polyethylene composition has a density of between 0.938 to 0.945 g/cm³.

In some embodiments, the first component may be provided in flake or in pellet form, preferably in pellet form. In pellet form, the recyclate material is already homogenized and thus, it can be assumed that the pellets of the same batch essentially exhibit the same properties with only minor fluctuations.

In some embodiments, the blended polyethylene composition has a MIE from 0.1 to 3, wherein MIE is the melt flow index at 190°C with a load of 2.16 kg determined according to ISO 1133-2:2011. In particular, the blended polyethylene composition may have a MIE of less than 2, preferably less than 1.5.

The disclosure further relates to a blended polyethylene composition obtainable by the above-described method.

The disclosure also relates to a +manufactured article comprising the blended polyethylene composition.

In some embodiments, the difference between the MIE of the manufactured article and the MIE of the blended polyethylene composition in pellet form is less than 15%.

The manufactured article may be a geomembrane.

### DETAILED DESCRIPTION OF THE DISCLOSURE

While the provided embodiments will be described more fully hereinafter, these embodiments are provided to satisfy applicable laws and regulations. As such, it will be apparent to those skilled in the art that the embodiments can incorporate changes and modifications without departing from the general scope. This disclosure is intended to include the modifications and alterations as far as the modifications and alterations come within the scope of the appended claims or the equivalents thereof.

As used in this specification and the claims, the singular forms "a", "an" and "the" include plural referents unless the context dictates otherwise.

As used in this specification and the claims, the terms "comprising", "containing" or "including" means that at least the named compound, element, material, particle or method step is present in the composition, the article or the method, but does not exclude the presence of other compounds, elements, materials, particles, or method steps even if the other such compounds, elements, materials, particles, or method steps have the same function as that which is named unless expressly excluded in the claims. It is also to be understood that the mention of one or more method steps does not preclude the presence of additional method steps before or after the combined recited steps or intervening method steps between those steps expressly identified.

Moreover, it is also to be understood that the lettering of process steps or ingredients is for identifying discrete activities or ingredients and the recited lettering can be arranged in any sequence, unless expressly indicated.

For the purpose of the present description and of the claims which follow, except where otherwise indicated, numbers expressing amounts, quantities, percentages, and so forth, are to be understood as being modified by the term "about". Also, ranges include any combination of the maximum and minimum points disclosed and include any intermediate ranges therein, which may or may not be specifically enumerated herein.

### Definitions

In the present description, the term "a-olefin" or "alpha-olefin" means an olefin of formula CH₂=CH-R, wherein R is a linear or branched alkyl containing from 1 to 10 carbon atoms. In some embodiments, the α-olefin is selected from the group consisting of propylene, 1-butene, 1-pentene, 1-hexene, 1-octene, and 1-decene.

In the present description, the term "first" refers to the order in which a particular species is presented and does not necessarily indicate that a "second" species will be presented. For example, "first polymer composition" refers to the first of at least one polymer composition. The term does not reflect priority, importance, or significance in any other way. Similar terms used that can be used herein include "second," "third," "fourth," etc.

In the present description, the term "homopolymer" as used herein is consistent with its ordinary meaning. To the extent that a homopolymer can contain one or more monomeric units, the incorporation of additional monomeric units has no measurable effect on the polymer's primary, secondary or tertiary structure or no effect on the polymer's physical or chemical properties. In other words, there is no measurable difference between a polymer, comprising 100 weight percent of a first monomeric unit, and a co-polymer, including more than one monomeric units.

In the present description, the terms "monomer" and "comonomer" are used interchangeably. The terms refer to any compound with a polymerizable moiety that is added to a reactor to produce a polymer. In those instances, wherein a polymer is described as made from or containing one or more monomers, for example, a polymer made from or containing propylene and ethylene, the polymer, of course, is made from or containing units derived from the monomers, for example, -CH₂-CH₂-, and not the monomer itself, for example, CH₂=CH₂.

In the present description, the term "PCR" refers interchangeably to Post-Consumer Recycled or Post-Consumer Recyclate, including polymers such as high-density polyethylene (HDPE) and polypropylene (PP), which are recycled and reprocessed into a resin for use in various applications.

In the present description, the term "PIR" refers interchangeably to Post-Industrial Recycled or Post-Industrial Recyclate.

In the present description, the term "polymer" means a macromolecular compound prepared by polymerizing monomers of the same or different type. The term "polymer" includes homopolymers, copolymers, terpolymers, interpolymers, and so on.

In the present description, the term "polymer composition" refers to a composition made from or containing at least one polymer.

In the present description, the term "polyolefin" is used herein broadly to include polymers such as polyethylene, ethylene-alpha olefin copolymers (EAO), polypropylene, polybutene, and ethylene copolymers having at least about 50 percent by weight of ethylene polymerized with a lesser amount of a comonomer such as vinyl acetate, and other polymeric resins within the "olefin" family classification.

Polyolefins can be made by a variety of processes including batch and continuous processes using single, staged, or sequential reactors, slurry, solution, and fluidized bed processes and one or more catalysts including for example, heterogeneous and homogeneous systems and Ziegler, Phillips, metallocene, single-site, and constrained geometry catalysts to produce polymers having different combinations of properties.

In the present description, the term "recycle" refers to the conversion of waste into a reusable material. The waste is created by consumers, in the case of post-consumer waste, or by manufacturers during the preparation of polymer-based products, in the case of post-industrial waste.

The term "low density polyethylene" is used herein to embrace, as alternatives, both a single ethylene polymer and a polyethylene composition, i.e. a composition comprising two or more ethylene polymers.

As used herein, the term "virgin" polymer means that it is a polymer, which has not been subjected to any process for production of finished articles, like fibers or sheets for thermoforming. The virgin polymer may be obtained from polymerization processes, such as from polymerization processes of fossil materials-based monomeric materials and/or biologically derived monomeric materials. Biobased polyethylenes and monomers are derived from natural products and are distinguished from polymers and monomers obtained from fossil-fuel sources. Because biobased materials are obtained from sources that may actively reduce CO₂ in the atmosphere or otherwise require less CO₂ emission during production, such materials are often regarded as "green" or renewable.

Thus, the virgin polymer has not been subjected to post-processing, except for possible pelletization, which is still considered part of the polymer production process.

The second component may comprise or consist of virgin LDPE, preferably of virgin LDPE obtained from fossil materials based monomeric materials.

As used herein, the term "recyclate" means post-consumer recycled ("PCR") polymer and/or post-industrial recycled ("PIR") polymer. PCR polymer is recyclate derived from an end product that has completed its life cycle as a consumer item and would otherwise be disposed of as waste (e.g. a polyethylene water bottle). PCR includes high-density polyethylene post-consumer recycled resin (HDPE PCR) and polypropylene post-consumer recycled resin (PP PCR). Among other forms, PCR resins may take the form of granules, pellets, and powders.

PIR polymer recyclate is derived from plastic scrap that is generated as waste from an industrial process. PCR polyolefins include polyolefins that have been collected in commercial and residential recycling programs, including flexible packaging (cast film, blown film and BOPP film), rigid packaging, blow molded bottles, and injection molded containers. In the present description, the disclosed, recycling processes for preparing and using PCR resins are extendable to PIR resins. The terms "comprise", "have", "include" and "contain" (and their variants) are openended linking verbs and allow the addition of other elements when used in a claim.

The phrase "consisting of" or "consist of" are closed and excludes all additional elements.

The phrase "consisting essentially of" excludes additional material elements but allows the inclusions of non-material elements that do not substantially change the nature of the disclosure.

Hence, in general terms, the recyclate is a material deriving from an article manufacturing process. As used herein "recyclate" also encompasses "regrind" material.

Usually, through a step of separation from other polymers, such as PVC, PET, or PS, two main polyolefinic fractions are obtained, namely polyethylene recyclate (including HDPE, MDPE, LDPE, and LLDPE) and polypropylene recyclate (including homopolymers, random copolymers and heterophasic copolymers). Polyethylene recyclate can be further separated to recover a portion containing LDPE in significant amounts, in particular of 35% by weight or more, with respect to the total weight.

The first component may comprise or consist of recyclate material, in particular recyclate material having a HDPE as a large fraction, i.e. recyclate HDPE. The HDPE fraction of the recycle material may be larger than 25 % by weight, preferably larger than 30 % by weight, more preferably larger than 45 % by weight, with respect to the total weight of the first component.

The first component may particularly have a density of between 0.940 to 0.965 g/cm³.

"LDPE" as used herein, means ethylene homopolymers and ethylene copolymers produced in radical polymerization.

The polymerization is generally carried out under high pressure, as hereinafter explained in detail.

Examples of LDPE copolymers include ethylene-vinyl acetate copolymers, ethylene-vinyl alcohol copolymers, ethylene-acrylate copolymers, ethylene-methacrylate copolymers, ethylene-α-olefin copolymers, and mixtures thereof.

Examples of α-olefin comonomers in the LDPE copolymers include C₃-C₁₀ α -olefins, such as propylene, 1-butene, 1-hexene, 1-octene and mixtures thereof.

When present, comonomers can be present in amounts up to 15% by weight, up to 10% by weight or up to 5% by weight with respect to the total weight of the copolymer. In some embodiments, the comonomers may be present in amounts ranging from 0.001 to 15% by weight, based on the total weight of the copolymer.

In general, the term "copolymer" is meant to include also polymers containing more than one kind of comonomers, such as terpolymers.

There are two basic high pressure polymerization processes for the manufacture of LDPE: autoclave and tubular.

The LDPE made by the autoclave reactor process ("autoclave LDPE") has a high concentration of long chain branches, resulting into high values of elongational hardening, and a relatively broad molecular weight distribution that make it easy to process.

The autoclave polymerization may be carried out in the presence of radical initiating agents selected from organic peroxides.

The tubular reactor process does not necessarily require the use of organic peroxides. It can be carried out by using oxygen alone as the radical initiating agent, thus allowing to prepare LDPE which is free from products of chemical degradation of organic peroxides.

The said LDPE can also be prepared with a mixed process combining both autoclave and tubular reactors.

Process operating conditions can include but are not limited to, a pressure in the range of from 70 MPa to 700 MPa, preferably from 140 to 190 MPa, and a temperature in the range of from 150°C to 500°C, preferably from 150°C to 320°C.

The polymerization gas can optionally comprise one or more chain transfer agents known in the art, such as propylene, propane, and propionic aldehyde.

Such chain transfer agents are used to regulate the molecular weights.

The said processes and the resulting LDPE product are well known in the art. For instance, US patent No. 3,691,145 and US patent application NO. 2010/0076160 teach producing LDPE in a tubular reactor process.

Virgin LDPE polymers having the characteristics quoted above for the second component, are known in the art. Specific examples are the polymers commercially available with the brand name Lucalen (LyondellBasell). It has surprisingly been found that a HDPE geomembrane having a sufficiently high ESCR can be produced by blending HDPE recyclate material with a low-density polyethylene.

The first component, in particular the HDPE recyclate and consequently the present blended polyethylene composition may comprise one or more additional polyethylene components, selected in particular from HDPE (High Density Polyethylene, typically having a density from 0.940 to 0.965 g/cm³), MDPE (Medium Density Polyethylene, typically having a density from 0.926 to 0.940 g/cm³), LLDPE (Linear Low Density Polyethylene, typically having a density from 0.910 to 0.925 g/cm³) and mixtures thereof.

These additional components may be obtained by way of polymerization processes in the presence of coordination catalysts. Said processes and the homopolymers and copolymers obtained from them are widely described in the art.

In particular it is possible to carry out the polymerization process in the presence of a Ziegler-Natta catalyst or single site catalyst.

As is well known, a Ziegler-Natta catalyst comprises the product of the reaction of an organometallic compound of group 1, 2 or 13 of the Periodic Table of Elements with a transition metal compound of groups 4 to 10 of the Periodic Table of Elements (new notation). In particular, the transition metal compound may be selected among compounds of Ti, V, Zr, Cr and Hf and is preferably supported on MgCl₂.

Preferred organometallic compounds are the organo-AI compounds.

The single site catalysts are known in the art and are generally selected from metallocene and non-metallocene single site catalysts.

Examples of metallocene single site catalysts are zirconocenes and hafnocenes, for instance cyclopentadienyl or indenyl complexes of zirconium or hafnium, like bis (cyclopentadienyl) zirconium dichloride, bis (indenyl) zirconium dichloride or bis (indenyl) hafnium dichloride.

Examples of non-metallocene single site catalysts are iron complex compounds preferably having a tridentate ligand.

In particular, the blended polyethylene composition of the present disclosure may be prepared by processing the components in an extruder device. Extruder devices may for example be extruders or continuous mixers. These extruders or mixers can be single- or two-stage machines which melt and homogenize the low-density polyethylene. Examples of extruders are pin-type extruders, planetary extruders or corotating disk processors. Other possibilities are combinations of mixers with discharge screws and/or gear pumps. Preferred extruders are screw extruders and in particular multi-screw extruders, preferably twin-screw extruders. Particular preference is given to twin-screw extruders and continuous mixers with discharge elements and especially to continuous mixers with counter rotating twin rotor or to extruder devices comprising at least one co-rotating twin screw extruder. This further ensures sufficient homogenization of the components during melt blending in the extruder. Alternatively, the components may be homogenized in a mixing device, such as a tumble mixer before being fed to the extruder device. Machinery of this type is conventional in the plastic industry and is manufactured by, for example Leistritz Extrusionstechnik GmbH, Nuremberg, Germany; Coperion GmbH, Stuttgart, Germany; KraussMaffei Berstorff GmbH, Han-nover, Germany; The Japan Steel Works LTD., Tokyo, Japan; Farrel Corporation, Ansonia, USA; or Kobe Steel, Ltd., Kobe, Japan. Extruder devices are further usually equipped with units for pelletizing the melt, such as underwater pelletizers.

In some embodiments, more than two components may be provided that form the blended polyethylene composition, wherein the components may be added in subsequent extrusion steps or together with the first and second component.

In an extruder device, the specific energy input (SEI) refers to the energy input that is mechanically applied to the melt through the rotation of the screws and which correlates to the power consumption of the motor. It can be expressed in kWh/kg.

Indicatively, the SEI value may range from 0.05 to 0.20 kWh/kg, preferably from 0.08 to 0.15 kWh/kg.

The temperatures at which the blending step is carried out is preferably low enough to avoid thermal vis-breaking, in particular equal to or lower than 250°C, more preferably lower than 240°C.

The lower limit of the temperature at which the blending step is carried out is generally equal to or higher than the melting point of the polymer material employed in such step. Preferably, the lower limit is 180°, more preferably 190°C.

Although not required, additives can be fed to the blended polyethylene composition. Feeding of these additives may occur before, during or after melt blending.

Such additives are common in the art. types of additives for preparing polyethylene compositions are, for example, antioxidants, melt stabilizers, light stabilizers, acid scavengers, lubricants, processing aids, antiblocking agents, slip agents, antistatic agents, antifogging agents, pigments or dyes, nucleating agents, flame retardants or fillers. It is common that several additives are added. The multiple additives can be different types of additives. It is however also possible that several representatives of one type of additives are added to the low density polyethylene. Additives of all these types are generally commercially available and are described, for example, in Hans Zweifel, Plastics Additives Handbook, 5th Edition, Munich, 2001.

In a particularly preferred embodiment, carbon black is added as an additive. Carbon black may be added for increasing the UV protection in geomembrane applications. The term "carbon black" designates a family of finely divided carbon pigments produced by incomplete combustion or thermal decomposition of hydrocarbons which have a high surface-area-to volume ratio. Examples of carbon black are furnace black or acetylene black. In a preferred embodiment, the carbon black has particle sizes in the range from 5 nm to 500 nm, more preferably from 15 nm to 60 nm and most preferably of not more than 25 nm. Carbon black is employed in the preparation of the blended polyethylene composition of the present disclosure inter alia to provide UV resistance and weatherability to thereof produced articles and to ensure performance of certified products such as regulated geomembranes.

Carbon black is preferably added in an amount of 1.5 to 3.0 % by weight carbon black based on the total weight of the blended polyethylene composition, preferably 2.1 wt% to 2.6 wt%. Preferably, further additives are added, e.g. antioxidants in an amount of 0.12 to 0.20 wt%, acid scavenger, such as Calcium stearate in an amount of 0.09 to 0.12 wt% and lubricant, such as magnesium stearate in an amount of 0.09 to 0.12 wt%.

### TESTING

The following analytical methods were used to characterize the polymer compositions.

### Melt flow index

Determined according to ISO 1133-1 2012-03 at 190°C with the specified load.

### Density

Determined according to ISO 1183-1:2012 at 23°C.

### Molecular Weight Distribution Determination

The determination of the means Mw and Mn and of Mw/Mn derived therefrom was carried out by high-temperature gel permeation chromatography using a method described in ISO 16014-1, -2, -4, issues of 2003. The specifics according to the mentioned ISO standards are as follows: Solvent 1,2,4-trichlorobenzene (TCB), temperature of apparatus and solutions 135°C and as concentration detector a PolymerChar (Valencia, Paterna 46980, Spain) IR-4 infrared detector, capable for use with TCB. A WATERS Alliance 2000 equipped with the following pre-column SHODEX UT-G and separation columns SHODEX UT 806 M (3x) and SHODEX UT 807 (Showa Denko Europe GmbH, Konrad-Zuse-Platz 4, 81829 Muenchen, Germany) connected in series was used.

The solvent was vacuum distilled under Nitrogen and was stabilized with 0.025% by weight of 2,6-di-tert-butyl-4-methylphenol. The flowrate used was 1 ml/min, the injection was 500µl and polymer concentration was in the range of 0.01% < conc. < 0.05% w/w. The molecular weight calibration was established by using monodisperse polystyrene (PS) standards from Polymer Laboratories (now Agilent Technologies, Herrenberger Str. 130, 71034 Boeblingen, Germany)) in the range from 580g/mol up to 11600000g/mol and additionally with Hexadecane.

The calibration curve was then adapted to Polyethylene (PE) by means of the Universal Calibration method (Benoit H., Rempp P. and Grubisic Z., & in J. Polymer Sci., Phys. Ed., 5, 753(1967)). The Mark-Houwing parameters used herefore were for PS: k_{PS}= 0.000121 dl/g, α_{PS}=0.706 and for PE k_{PE}= 0.000406 dl/g, α_{PE}=0.725, valid in TCB at 135°C. Data recording, calibration and calculation was carried out using NTGPC_Control_V6.02.03 and NTGPC_V6.4.24 (hs GmbH, Hauptstraße 36, D-55437 Ober-Hilbersheim, Germany) respectively.

### Flexural Modulus

Determined according to norm ISO 178:2010, measured 10 days after molding.

### ESCR

The environmental stress crack resistance (ESCR) was measured according to ASTM D 5397, wherein the sample is tested at 50°C in 5% Northwood soap at a notch depth of 20%.

### Hardness Shore A/D

Determined according to norm ISO 868.

### Comonomer content

The comonomer content was determined by means of IR in accordance with ASTM D 6248 98, using an FT-IR spectrometer Tensor 27 from Bruker.

### Melt strength

Melt strength of a polymer is a parameter in melt processing operations where stretching or drawing is involved at one or more stages in the process. It depends on molecular parameters like e.g. molecular weight, molecular weight distribution and/or polymer branches. The test device measures the extensional properties of polymer melts by drawing a vertical melt strand under constant force in the Rheotens spinline, which is located underneath the capillary die, at either constant pull-off speed or with a linear accelerating velocity.

Melt Strength analysis was carried out at 190°C on a Göttfert Rheotester 1000 (12 mm Barrel diameter, Capillary die LID = 20/2), equipped with a RHEOTENS 71.97 device. The RHEOTENS consists of two upper and two lower driven, counter rotating wheels that are connected to a very sensitive balance-system. The vertical gap between the wheels was 0.3 mm. After 10 min. melting time, the polymer was extruded with a shear rate of 50 1/s. The polymer strand leaves the capillary die and the die-exit velocity v₀ is recorded. At a strand length of 74 mm the upper two wheels pull the melt strand downwards with an acceleration of 2.4 mm/s² and the velocity v is recorded (the lower two wheels are only for additionally stabilizing the strand during drawdown). The drawdown ratio λ = v/v₀ at break, the velocity at break, and the force at break of the melt strand (F(max) = Melt Strength) are recorded.

## Claims

1. A process for producing a blended polyethylene composition for geomembranes, wherein the process comprises the step of blending a first component comprising one or more recycled polymer compositions, a second component comprising one or more polyethylene and optionally one or more additives, wherein the blended polyethylene composition comprises from 30 to 90 % by weight, in particular from 35 to 80 % by weight or from 40 to 70 % by weight, with respect to the total weight of the blended polyethylene composition.

2. The process of claim 1, wherein the second component is a low-density polyethylene having a density from 0.910 to 0.940 g/cm³, preferably from 0.915 to 0.935 g/cm³ determined according to ISO 1183-1:2012 at 23°C.

3. The process of claim 1 or 2, wherein the blended polyethylene composition has a density of 0.935 to 0.965 g/cm³ determined according to ISO 1183-1:2012 at 23°C.

4. The process of any one of claims 1 to 3, wherein carbon black is added in an amount of 1.5 to 3.0 % by weight carbon black based on the total weight of the blended polyethylene composition.

5. The process of any one of claims 1 to 4, wherein the first component comprises a mixture of polyethylene (PE) and polypropylene (PP) polymers in a weight ratio from 99:1 to 51:49.

6. The process of any one of claims 1 to 5, wherein the first component is a recycled high density polyethylene composition, having a density from 0.940 to 0.965 g/cm³ determined according to ISO 1183-1:2012 at 23°C.

7. The process of any one of claims 1 to 6, wherein the first component is provided in flake or pellet form, preferably in pellet form.

8. The process of any one of claims 1 to 7, wherein the blended polyethylene composition has a MIE from 0.1 to 3, wherein MIE is the melt flow index at 190°C with a load of 2.16 kg determined according to ISO 1133-2:2011.

9. The process of claim 8, wherein the blended polyethylene composition has a MIE of less than 2, preferably less than 1.5.

10. A blended polyethylene composition obtainable by the method of any one of claims 1 to 9.

11. A manufactured article comprising the blended polyethylene composition of claim 10.

12. The manufactured article of claim 11, wherein a difference between the MIE of the manufactured article and the MIE of the blended polyethylene composition is less than 15%.

13. The manufactured article of claim 12, wherein the manufactured article is a geomembrane.
